Europäisches Patentamt

European Patent Office

Office européen des brevets

(11) Publication number: **0 331 358**
**A2**

## (12) EUROPEAN PATENT APPLICATION

(21) Application number: 89301807.7

(22) Date of filing: 23.02.89

(51) Int. Cl.⁴: **C08K 3/22 , C08L 23/02 , C08L 51/06 , //(C08L23/02, 51:06,C08K3:22),(C08K3/22, C08L23:02,51:06)**

(30) Priority: 26.02.88 JP 42337/88

(43) Date of publication of application:
06.09.89 Bulletin 89/36

(84) Designated Contracting States:
BE DE FR GB IT NL SE

(71) Applicant: **TONEN SEKIYUKAGAKU K.K.**
**1-1, Tsukiji, 4-Chome**
**Chuo-Ku Tokyo 104(JP)**

Applicant: **EXXON CHEMICAL JAPAN LTD.**
**TBS Kaikan Bldg Akasaka 5-chome**
**Minato-ku**
**Tokyo(JP)**

(72) Inventor: **Sezaki, Eiji**
**8-425, Shimodacho 5-chome Kohoku-ku**
**Yokohama-shi Kanagawa-ken(JP)**
Inventor: **Akami, Mastatoshi**
**Dream Heights 11-406 1403, Matanocho**
**Totsuka-ku**
**Yokohama-shi Kanagawa-ken(JP)**
Inventor: **Endo, Hisafumi**
**6-5-501, Kimitsuruma 5-chome**
**Sagamihara-shi Kanagawa-ken(JP)**

(74) Representative: **Dew, Melvyn John et al**
**Exxon Chemical Limited Exxon Chemical**
**Technology Centre P.O. Box 1**
**Abingdon Oxfordshire, OX13 6BB(GB)**

(54) Flame-retarded thermoplastic elastomer composition.

(57) A flame-retardant thermoplastic elastomer composition which comprises (A) 100 parts by weight of polyolefin-based thermoplastic elastomer, (B) 2 to 100 parts by weight of modified polyolefin and (C) 30 to 250 parts by weight of metal hydrate.

## FLAME-RETARDANT THERMOPLASTIC ELASTOMER COMPOSITION

The present invention relates to a flame-retardant thermoplastic elastomer composition comprising a polyolefin-based thermoplastic elastomer, modified polyolefin and metal hydrate, said composition having superior mechanical properties, heat resistance and moldability.

The polyolefin-based thermoplastic elastomer is expected to find uses in a broad range of markets under development such as automotive parts, electric materials and building materials, on account of its good processability as a material having the intermediate property of rubber and plastics. In fact, however, this thermoplastic has limited uses because of its flammability. Therefore, there is a strong demand for making it flame-retarded.

It is a commonly used way of imparting flame retardance to the polyolefin-based thermoplastic elastomer to incorporate it with a halogen-based organic flame retardant or an inorganic flame retardant such as antimony trioxide and metal hydrate. There is known, for example, a flame-retardant elastomer composition composed of an olefin-based thermoplastic elastomer, chlorinated polyethylene, vinyl chloride resin and antimony trioxide. (See Japanese Patent Laid-open No. 101645/1987.)

Flame-retarded compositions incorporated with a halogen-based flame retardant have a disadvantage of giving off a toxic halogen gas upon heating. Therefore, there is a strong demand for flame retardant compositions containing a halogen-free flame retardant which gives off no toxic gases. An example of such flame retardants is a metal hydrate. A disadvantage of the metal hydrate flame retardant is that it has to be added in large quantities if it is to impart sufficient flame retardance. This impairs physical properties such as tensile strength and tensile elongation.

It is an object of the present invention to provide a flame-retarded polyolefin thermoplastic elastomer which is incorporated with a halogen-free flame retardant with little if any loss of mechanical and other characteristic properties.

As the result of extensive studies, the present inventors found that the above-mentioned object is achieved by incorporating a polyolefin-based thermoplastic elastomer with a halogen-free flame retardant and a modified polyolefin. The present invention was completed on the basis of this finding.

The gist of the present invention resides in a flame-retarded thermoplastic elastomer composition which comprises (A) of 100 parts by weight of polyolefin-based thermoplastic elastomer, (B) 2 to 100 parts by weight of modified polyolefin and (c) 30 to 250 parts by weight of metal hydrate.

Examples of the polyolefin-based thermoplastic elastomer used in the present invention include the following.

(1) A thermoplastic elastomer composed of (A) 10 to 90 parts by weight of crystalline polyolefin, preferably polypropylene or propylene-ethylene copolymers and (B) 90 to 10 parts by weight of olefin-based copolymer rubber, preferably ethylene-propylene copolymer rubber or ethylene-propylene-diene copolymer rubber (with the total amount of (A) and (B) being 100 parts by weight) and optionally (C) 10 to 150 parts by weight [for 100 parts by weight of (A) plus (B)] of mineral oil softener, preferably process oil, preferably with the rubber component partially crosslinked with a crosslinking agent (such as an organic peroxide) by dynamic heat treatment.

(2) A thermoplastic elastomer composed of (A) l0 to 90 parts by weight of crystalline polyolefin, preferably polypropylene or propylene-ethylene copolymer, particularly propylene-ethylene block copolymer, (B) 90 to 10 parts by weight of halogenated butyl rubber, preferably chlorinated or brominated butyl rubber (with the total amount of (A) and (B) being 100 parts by weight) and (C) 10 to 120 parts by weight [for 100 parts by weight of (A) plus (B)] of olefin-based copolymer rubber, preferably ethylene-propylene copolymer rubber or ethylene-propylene-diene copolymer rubber and optionally (D) 10 to 150 parts by weight [for 100 parts by weight of (A) plus (B)] of mineral oil softener, preferably process oil, preferably with the halogenated butyl rubber partially crosslinked with a metal oxide crosslinking agent (such as zinc oxide) by dynamic heat treatment.

The latter is preferable from the standpoint of moldability, heat resistance and compatibility.

The above-mentioned polyolefin-based thermoplastic elastomer may undergo dynamic partial crosslinking which preferably comprises melt-mixing it with 0.1 to 2 parts by weight of an organic peroxide crosslinking agent and an optional crosslinking auxiliary, or 0.2 to 10 parts by weight of a metal oxide crosslinking agent and an optional crosslinking auxiliary and neutralizing agent, for 100 parts by weight of the total amount of the components, at a temperature of 160 to 250°C which is higher than the melting point of the resin.

The modified polyolefin used in the present invention may be one which is obtained by the addition reaction between a polyolefin and an unsaturated carboxylic acid or a derivative thereof.

Examples of the above-mentioned polyolefin include homopolymers of α-olefin such as ethylene, propylene, butene-1, pentene-1, hexene-1 and 4-methyl-pentene-1; and copolymers of ethylene and one or more than one α-olefin. Preferable among these polyolefins are low-density polyethylene, linear low-density polyethylene, medium- and high-density polyethylene, polypropylene and propyleneethylene random or block copolymer.

The modified polyolefin may include olefin-based copolymer rubber such as a copolymer rubber composed of two kinds or more of α-olefins such as ethylene, propylene, butene-1, and hexene-1, and a copolymer rubber composed of two kinds or more of α-olefins and a non-conjugated diene such as cyclopentadiene, methyl norbornene and ethylidene norbornene.

The unsaturated carboxylic acid to react with the polyolefin and olefin-based copolymer rubber includes, for example, maleic acid, endo-bicyclo-[2.2.1]-5-heptene-2,3-dicarboxylic acid, acrylic acid, methacrylic acid, itaconic acid and furmaric acid. Their derivatives include acid anhydrides, acid amides and esters.

The reaction between the polyolefin and the unsaturated carboxylic acid or a derivative thereof may be accomplished in any known process. According to one process, the polyolefin and the olefin-based copolymer rubber are mixed, separately or all at once, together with the unsaturated carboxylic acid or a derivative thereof and a reaction initiator (such as an organic peroxide), and the resulting mixture is melted for mixing. The mixing ratio of the polyolefin to the olefin-based copolymer rubber should preferably be 10/90 to 90/10 in percent by weight. The amount of the unsaturated carboxylic acid or a derivative thereof to be added to the polyolefin and/or olefin-based copolymer rubber should preferably to 0.02 to 2 wt.%.

According to the present invention, 100 parts by weight of the polyolefin-based thermoplastic elastomer is incorporated with 2 to 100 parts by weight, preferably 5 to 50 parts by weight, of the modified polyolefin. With less than 2 parts by weight, the modified polyolefin does not make the polyolefin-based thermoplastic elastomer miscible with the metal hydrate (mentioned later) with the result that the resulting elastomer composition is poor in physical properties. Conversely, with more than 100 parts by weight, the modified polyolefin does not produce any additional effect but is wasted, with the result that the resulting elastomer composition is poor in mechanical properties and flame retardance.

The metal hydrate used in the present invention is one which decomposes, liberating water, through endothermic reaction at a temperature at which the polyolefin-based thermoplastic elastomer burns, thereby completely suppressing the combustion of the elastomer composition. Examples of the metal hydrate include aluminum hydroxide, magnesium hydroxide, calcium hydroxide, barium hydroxide and hydrotalcite. The metal hydrate should preferably have a particle diameter in the range of 0.05- to 50 μm.

The metal hydrate should be added in an amount of 30 to 250 parts by weight, preferably 60 to 200 parts by weight, for 100 parts by weight the polyolefin-based thermoplastic elastomer. With less than 30 parts by weight, the metal hydrate does not produce the desired flame-retardant effect. Conversely, with more than 250 parts by weight, the metal hydrate adversely affects the mechanical properties of the resulting elastomer composition. The ratio of the modified polyolefin to the metal hydrate should preferably be in the range of 1/4 to 1/12 (parts by weight).

The flame-retardant thermoplastic elastomer composition of the present invention can be produced by melt-mixing the polyolefin-based thermoplastic elastomer, modified polyolefin, metal hydrate and optional additives. The melt-mixing may be accomplished by using a commonly used kneader, Banbury mixer, screw extruder, mixing roll, or the like. According to an alternative process, it can be produced directly by adding the modified polyolefin and metal hydrate to the production line when the polyolefin-based thermoplastic elastomer is produced. However, the former process is preferable because it disperses the metal hydrate well, providing good flame retardance.

Examples

The invention will be described in more detail with reference to the following examples, in which quantities are expressed as parts by weight. The test methods employed in the examples are given below.

(1) MFR: JIS K-7210 (load 10 kg, at 230°C)

(2) Hardness: JIS K-6301, type A

(3) Tensile strength at break: elongation: JIS K-6301

(4) Tear resistance: JIS K-6301, type B

(5) Compression set: JIS K-6301, at 70°C for 22 hours hours with 25% compression

(6) Flame retardance: UL-94 of Underwriters' Laboratories, Inc. The burning test is performed on a set of five specimens, each measuring 127 mm long, 12.7 mm wide and 3.18 mm thick, and materials are classified as V-0, V-1, or V-2 on the basis of the test results as follows:

V-0: None of the specimens burn for more than 10 seconds after the application of the test flame, burn with flaming combustion for more than 50 seconds in total for the 10 flame applications for each set of five specimen, and drip flaming particles that ignite the dry absorbent cotton located below the test specimen.

V-1 None of the specimens burn for more than 30 seconds after the application of the test flame, burn with flaming combustion for more than 250 seconds in total for the 10 flame applications for each set of five specimen, and drip flaming particles that ignite the dry absorbent cotton located below the test specimen.

V-2 None of the specimens burn for more than 30 seconds after the application of the test flame and burn with flaming combustion for more than 250 seconds in total for the 10 flame applications for each set of five specimen, but some of the specimens may drip flaming particles that ignite the dry absorbent cotton located below the test specimen.

Incidentally, any specimens are classified as "flammable" according to the criteria of the present invention, instead of UL-94 standard, if they burn for more than 30 seconds after the removal of the test flame or the total flaming combustion time of a set of five specimens exceeds 250 seconds.

Examples 1 to 6 and Comparative Examples 1 and 2

The following components were melt-mixed according to the formulation shown in Table 1 by using a Banbury mixer at 175°C for 3 to 10 minutes. The resulting mixture was pelletized by extrusion. The pellets thus obtained were made into test pieces by injection molding. The specimens were tested for physical properties. The results are shown in Table 1.

Polyolefin-based Thermoplastic Elastomer

Prepared by heat-mixing in a Banbury mixer 75 parts of propylene-ethylene block copolymer ("Tonen Polypro 7-315" made by Tonen Sekiyukagaku), 35 parts of chlorinated butyl rubber ("Chlorobutyl 1066" made by Exxon Chemical) or brominated butyl rubber ("Bromobutyl 2244" made by Exxon Chemical), 35 parts of ethylene-propylene rubber ("Vistalon 707" made by Exxon Chemical) 10 parts of paraffin process oil (softener), 1 part of zinc oxide (crosslinking agent), 1 part of crosslinking auxiliary and 0.5 parts of halogen neutralizing agents, so that the chlorinated butyl rubber or brominated butyl rubber alone is dynamically crosslinked.

Modified Polyolefin

A propylene-ethylene block copolymer modified with maleic anhydride. (The amount of the acid added is 0.3 wt.%).

Metal Hydrate

Magnesium hydroxide (having a particle diameter of 0.6 to 0.8 μm, "Kisuma 5B" made by Kyowa Kagaku) and aluminum hydroxide (having an average particle diameter of 1 μm, "Hydilyte H-42S" made by Showa Denko).

4

Table 1

| | Example No. | | | | | | Comparative Example No. | |
|---|---|---|---|---|---|---|---|---|
| | 1 | 2 | 3 | 4 | 5 | 6 | (1) | (2) |
| Polyolefin-based thermoplastic elastomer (parts) | 100 | 100 | 100 | 100 | 100** | 100 | 100 | 100 |
| Modified polyolefin (parts) | 20 | 10 | 5 | 20 | 10 | 50 | - | - |
| Metal hydrate (parts) | 120 | 100 | 60 | 120* | 100 | 200 | 100 | - |
| Specific gravity (g/cm³) | 1.28 | 1.26 | 1.18 | 1.29 | 1.26 | 1.35 | 1.28 | 0.90 |
| MFR (g/10 min) | 1.0 | 3.0 | 4.0 | 0.9 | 3.0 | 0.5 | 1.0 | 11 |
| Hardness (JIS A) | 92 | 90 | 87 | 93 | 91 | 96 | 74 | 70 |
| Tensile strength at break (kg/cm²) | 100 | 80 | 80 | 95 | 80 | 130 | 32 | 70 |
| Elongation at break (%) | 200 | 200 | 300 | 200 | 210 | 200 | 250 | 500 |
| Tear resistance (kg/cm) | 60 | 50 | 50 | 55 | 50 | 50 | 30 | 40 |
| Compression set (%) | 70 | 70 | 60 | 70 | 68 | 75 | 70 | 50 |
| Flame retardance (UL 94) | V-O | V-O | V-2 | V-O | V-O | V-O | V-O | Flammable |

* Aluminum hydroxide
** Brominated butyl rubber

The composition of the present invention exhibits flame retardance without any loss of mechanical strength, heat stability, moldability and flexibility because it permits the flame retardant to disperse well with good miscibility. In addition, it gives off no toxic halogen gas and smokes only a little even when it burns, because it contains a metal hydrate as a halogen-free flame retardant.

It will find use in the application areas of automotive parts, electric home appliance parts and building materials. It is particularly suitable for automotive parts such as rack/pinion boots, cable outer coating, cable protector and automotive interior covering.

**Claims**

1. A flame-retardant thermoplastic elastomer composition which comprises (A) 100 parts by weight of polyolefin-based thermoplastic elastomer, (B) 2 to 100 parts by weight of modified polyolefin and (C) 30 to 250 parts by weight of metal hydrate.

2. A composition according to claim 1 wherein the polyolefin based thermoplastic elastomer comprises (A) 10 to 90 parts by weight of crystalline polyolefin, preferably polypropylene or propylene-ethylene copolymers and (B) 90 to 10 parts by weight of an olefin-based copolymer rubber, preferably ethylene-propylene copolymer rubber or ethylene-propylene-diene copolymer rubber (with the total amount of (A) and (B) being 100 parts by weight) and optionally (C) 10 to 150 parts by weight [for 100 parts by weight of (A) plus (B)] of mineral oil softener, preferably process oil, preferably with the rubber component partially crosslinked with a crosslinking agent (such as an organic peroxide) by dynamic heat treatment.

3. A composition according to claim 1 wherein the polyolefin based thermoplastic elastomer comprises (A) 10 to 90 parts by weight of crystalline polyolefin, preferably polypropylene or propylene-ethylene copolymer, particularly propylene-ethylene block copolymer, (B) 90 to 10 parts by weight of halogenated butyl rubber, preferably chlorinated or brominated butyl rubber (with the total amount of (A) and (B) being 100 parts by weight) and (C) 10 to 120 parts by weight [for 100 parts by weight of (A) plus (B)] of olefin-based copolymer rubber, preferably ethylene-propylene copolymer rubber or ethylene-propylene-diene

5

copolymer rubber and optionally (D) 10 to 150 parts by weight [for 100 parts by weight of (A) plus (B)] of mineral oil softener, preferably process oil, preferably with the halogenated butyl rubber partially crosslinked with a metal oxide crosslinking agent (such as zinc oxide) by dynamic heat treatment.

4. A composition according to claim 1, 2 or 3 which comprises from 5 to 50 parts by weight of modified polyolefin.

5. A composition according to any one of the preceding claims wherein the modified polyolefin comprises the addition reaction product of a polyolefin and, as co-reactant an unsaturated carboxylic acid or derivative thereof.

6. A composition according to claim 5 wherein the polyolefin comprises an alpha olefin homopolymer or copolymer, optionally including olefin-based copolymer rubber.

7. A composition according to claim 5 or 6 wherein the co-reactant comprises maleic acid, endo-bicyclo-[2.2.1]-5-heptene-2, 3-dicarboxylic acid, acrylic acid, methacrylic acid, itaconic acid or furmaric acid, or an acid anhydride, acid amide or ester derivative of any one or more thereof.

8. A composition according to any one of the preceding claims which contains from 60 to 200 parts by weight of metal hydrate.

9. A composition according to any one of the preceding claims wherein the metal hydrate has a particle diameter of from 0.05 to 50 micrometers.

10. A composition according to any one of the preceding claims wherein the metal hydrate comprises aluminium hydroxide, magnesium hydroxide, calcium hydroxide, barium hydroxide or hydrotalcite.

11. A composition according to any one of the preceding claims wherein the ratio by weight of modified polyolefin to metal hydrate is in the range of from 1:4 to 1:12.